# EUROPÄISCHE PATENTSCHRIFT

(11) **EP 2 766 234 B1**
(45) Veröffentlichungstag und Bekanntmachung des Hinweises auf die Patenterteilung: **27.11.2019**
(21) Anmeldenummer: 12781072.9
(22) Anmeldetag: 29.10.2012
(51) Int. Cl.: B60T 17/22, B60T 8/17

(54) **VERFAHREN UND ANORDNUNG ZUM ÜBERWACHEN EINES BREMSSYSTEMS EINER BREMSANORDNUNG EINES SCHIENENFAHRZEUGS**
METHOD AND ARRANGEMENT FOR MONITORING A BRAKE SYSTEM OF A BRAKE ARRANGEMENT OF A RAIL VEHICLE
PROCÉDÉ ET AGENCEMENT POUR LA SURVEILLANCE D'UN SYSTÈME DE FREINAGE D'UN ENSEMBLE DE FREINAGE D'UN VÉHICULE FERROVIAIRE

(30) Priorität: 22.12.2011 DE 102011089653
(43) Veröffentlichungstag der Anmeldung: 20.08.2014
(73) Patentinhaber: Siemens Mobility GmbH, 81739 München (DE)
(72) Erfinder: BREUER, Werner, 80469 München (DE); LÖWENSTEIN, Lars, 90768 Fürth Vach (DE); RAMBETIUS, Alexander, 90408 Nürnberg (DE); RULKA, Wolfgang, 81241 München (DE); STÜTZLE, Thorsten, 90480 Nürnberg (DE)
(86) Internationale Anmeldenummer: PCT/EP2012/071329
(87) Internationale Veröffentlichungsnummer: WO 2013/091957

(56) Entgegenhaltungen:
- EP-A2- 1 129 888
- WO-A1-00/71399
- WO-A1-01/92076

## Beschreibung

Es ist aus der deutschen Patentschrift DE 195 10 755 C2 eine Bremsanordnung für ein mehrere Bremssysteme aufweisendes schienengebundenes Triebfahrzeug bekannt. Bei dieser bekannten Bremsanordnung wird die Bremswirkung durch Erfassen der Verzögerung im Bremsfalle überwacht und bei zu geringer Bremswirkung ein Verzögerungssignal erzeugt. Mittels dieses Verzögerungssignals werden selbsttätig Maßnahmen ausgelöst, die unter Heranziehung aller auf dem Schienenfahrzeug vorhandenen Bremssysteme zu einer möglichst großen Restbremswirkung führen. Dabei wird auch die Sandstreuanlage aktiviert, um den eventuellen Fehlerfall zu berücksichtigen, dass ein durch das Auftreten des Fehlersignals erkanntes Bremsversagen auf einen sehr niedrigen Kraftschluss zwischen Rad und Schiene zurück zu führen sein könnte. Dies führt dazu, dass durch die aktivierte Sandstreuanlage der Verschleiß von Rad und Schiene unter Umständen unnötig erhöht wird und Sand womöglich auch im Bereich empfindlicher Weichenzungen gestreut wird. Außerdem muss eine relativ großvolumige und damit teuere Sandstrahlanlage eingesetzt werden.

Aus der WO 01/92076 A1 ist ein Verfahren und eine Vorrichtung zur Wirkungsüberwachung von Fahrzeugbremsanlagen, speziell zur Überwachung eines Gleitschutzsystems, bekannt.

Der Erfindung liegt die Aufgabe zugrunde, ein Verfahren zum Überwachen eines Bremssystems einer Bremsanordnung mit mehreren Bremssystemen eines Schienenfahrzeugs anzugeben, das sich vergleichsweise kostengünstig unter Schonung von Rad und Schienensystem durchführen lässt.

Eine Lösung der oben angegebenen Aufgabe wird erfindungsgemäß in einem Verfahren zum Überwachen eines Bremssystems mit mindestens einem Bremsaktor einer Bremsanordnung mit mehreren Bremssystemen eines Schienenfahrzeugs gesehen, bei dem eine Verzögerung des Schienenfahrzeugs unter Gewinnung einer Verzögerungsmessgröße erfasst wird, aus einem gemessenen Verzögerungsistwert und einem vorgegebenen Verzögerungssollwert als Verzögerungsmessgröße ein Verzögerungsdifferenzistwert gebildet wird, der Verzögerungsdifferenzistwert mit einem Verzögerungsdifferenz-Schwellenwert unter Bildung eines Verzögerungsdifferenz-Zwischenwertes verglichen wird, und bei einem über einem Toleranzwert liegenden Verzögerungsdifferenz-Zwischenwert ein Verzögerungsmangelsignal erzeugt wird, welches einem UND-Glied zugeführt wird. Weiterhin wird eine Bremskraft des mindestens einen Bremsaktors gemessen, wobei aus einem gemessenen Kraftistwert und einem vorgegebenen Kraftsollwert ein Kraftdifferenzistwert gebildet wird, der Kraftdifferenzistwert mit einem Kraftdifferenz-Schwellenwert unter Bildung eines Kraftdifferenz-Zwischenwertes verglichen, und bei einem über einem Toleranzwert liegenden Kraftdifferenz-Zwischenwert ein Kraftmangelsignal erzeugt, welches dem UND-Glied zugeführt wird, und aus den dem UND-Glied zugeführten Verzögerungsmangelsignal und Kraftmangelsignal ein Fehlermeldungssignal erzeugt. Ein Geschwindigkeitsistwert des Schienenfahrzeugs wird schließlich mit einem Geschwindigkeitsgrenzwert verglichen und bei einem unterhalb des Geschwindigkeitsgrenzwertes liegenden Geschwindigkeitsistwert wird die Bildung des Fehlermeldungssignals blockiert.

Bei dem Bremsaktor handelt es sich bevorzugt um einen Elektromotor.

Vorteilhaft ist diese Ausführungsform des erfindungsgemäßen Verfahrens vor allem insofern, als auch hier nicht sofort ein weiteres Bremssystem zugeschaltet wird, sondern erst geprüft wird, ob mit großer Wahrscheinlichkeit die zu geringe Verzögerung tatsächlich auf eine Schädigung des überwachten Bremssystems zurück geht.

Das Blockieren der Bildung des Fehlermeldungssignals bei einem einem unterhalb des Geschwindigkeitsgrenzwertes liegenden Geschwindigkeitsistwert führt vorteilhaft dazu, ein Fehlermeldungssignal nicht jedes Mal zu erhalten, wenn bei niedriger Fahrgeschwindigkeit das Schienenfahrzeug zum Stillstand kommt.

Insbesondere bei einem Bremssystem einer Bremsanordnung eines Schienenfahrzeugs für den Hochgeschwindigkeitsbereich wird es als vorteilhaft angesehen, wenn der Verzögerungssollwert in Abhängigkeit von einem gemessenen Geschwindigkeitsistwert des Schienenfahrzeugs verändert wird.

Alternativ kann in vorteilhafter Weise ein Geschwindigkeitsistwert des Schienenfahrzeugs gemessen und mit einem Geschwindigkeitsgrenzwert verglichen werden, und es kann bei einem unterhalb des Geschwindigkeitsgrenzwertes liegenden Geschwindigkeitsistwert der Verzögerungsdifferenz-Schwellenwert erhöht werden.

Die Bremskraft des mindestens einen Bremsaktors und eine Messgröße der Geschwindigkeit des Schienenfahrzeugs können hinsichtlich ihrer Vorzeichen überprüft und bei gleichen Vorzeichen sofort ein Fehlersignal zur Zuschaltung eines weiteren Bremssystems erzeugt werden.

Bei dem erfindungsgemäßen Verfahren können zum Erfassen von Verzögerung- und Geschwindigkeitsmessgröße Sensoren unterschiedlicher Ausführung zum Einsatz kommen. Besonders vorteilhaft ist der Einsatz eines Inertialsensorpakets. Dies gilt besonders für den Fall, dass die Vorzeichen von Verzögerung und Geschwindigkeit des Schienenfahrzeugs bestimmt werden sollen.

Bei dem erfindungsgemäßen Verfahren mit Erfassen der Bremskraft von Bremsaktoren kann diese Kraft auf verschiedene Weise gemessen werden. So erscheint es vorteilhaft, wenn die Bremskraftmessung mittels einer Kraft- und/oder Drehmomentenmessung an einer dem Bremsaktor zugeordneten Achse des Schienenfahrzeugs erfolgt.

Es kann aber auch vorteilhaft sein, die Bremskraftmessung mittels Sensoren an einem durch das Bremsen reversibel deformierten Verformungskörper vorzunehmen.

Auch kann die Bremskraftmessung bei einem elektrischen Aktor in vorteilhafter Weise durch Messung von Strömen und Spannungen erfolgen.

Bei einem Schienenfahrzeug insbesondere des Hochgeschwindigkeitsbereichs kann es vorteilhaft sein, wenn der Kraftsollwert in Abhängigkeit von einem gemessenen Geschwindigkeitsistwert des Schienenfahrzeugs verändert wird.

Auch kann es vorteilhaft sein, wenn der Kraftsollwert in Abhängigkeit von der Drehzahl eines mit dem Bremsaktor verbundenen Radsatzes verändert wird.

Der Erfindung liegt ferner die Aufgabe zugrunde, eine Anordnung zum Überwachen eines Bremssystems einer Bremsanordnung mit mehreren Bremssystemen eines Schienenfahrzeugs vorzuschlagen, mit dem sich das Überwachen des Bremssystems kostengünstig unter Schonung von Rad und Schienensystem durchführen lässt.

Zur Lösung dieser Aufgabe dient erfindungsgemäß eine Anordnung zum Überwachen eines Bremssystems mit mindestens einem Bremsaktor einer Bremsanordnung mit mehreren Bremssystemen eines Schienenfahrzeugs, mit einer Messeinrichtung zum Erfassen einer Verzögerung des Schienenfahrzeugs unter Gewinnung einer Verzögerungsmessgröße, welche ausgebildet ist, aus einem gemessenen Verzögerungsistwert und einem vorgegebenen Verzögerungssollwert einen Verzögerungsdifferenzistwert als Verzögerungsmessgröße zu bilden, mit einer Messanordnung zum Messen einer Bremskraft des mindestens einen Bremsaktors, mit einer der Messeinrichtung und der Messanordnung nachgeordneten Auswerteanordnung, welche ausgestaltet ist zum Vergleichen des Verzögerungsdifferenzistwertes der Verzögerungsmessgröße mit einem Verzögerungsdifferenz-Schwellenwert unter Bildung eines Verzögerungsdifferenz-Zwischenwertes, zum Erzeugen eines Verzögerungsmangelsignal bei einem über einem Toleranzwert liegenden Verzögerungsdifferenz-Zwischenwert, zum Bilden eines Kraftdifferenzistwertes aus einem gemessenen Kraftistwert und einem vorgegebenen Kraftsollwert, zum Vergleichen des Kraftdifferenzistwertes mit einem Kraftdifferenz-Schwellenwert unter Bildung eines Kraftdifferenz-Zwischenwertes, zum Erzeugen eines Kraftmangelsignals bei einem über einem Toleranzwert liegenden Kraftdifferenz-Zwischenwert, und zum Zuführen des Verzögerungsmangelsignal und des Kraftmangelsignals auf ein UND-Glied und Erzeugen eines Fehlermeldungssignals, und mit einer Erfassungseinrichtung zum Vergleichen eines Geschwindigkeitsistwertes des Schienenfahrzeugs mit einem Geschwindigkeitsgrenzwert, wobei bei einem unterhalb des Geschwindigkeitsgrenzwertes liegenden Geschwindigkeitsistwert das Erzeugen des Fehlermeldungssignals blockiert wird.

Damit lassen sich dieselben Vorteile erreichen, wie sie oben zum Verfahren zum Überwachen eines Bremssystems mit mindestens einem Bremsaktor angegeben sind.

Um zu vermeiden, dass nicht jedes Mal ein Fehlermeldungssignal ausgegeben wird, wenn das Schienenfahrzeug zum Stillstand kommt, weist vorteilhafterweise die Messeinrichtung eingangsseitig eine Auswertestufe auf, die mit ihrem Eingang an den Ausgang eines Inertialsensorpaketes angeschlossen ist und derart ausgebildet ist, dass sie an ihrem Ausgang eine von der Erd- und Zentrifugalbeschleunigung unbeeinflusste Geschwindigkeitsmessgröße des Schienenfahrzeugs abgibt. Ein Inertialsensorpaket ist beispielweise aus http://de.wikipedia.org/wiki/Inertialsensor bekannt.

Vorteilhaft ist es ferner, wenn die Auswertestufe ausgangsseitig auch mit der Messvorrichtung verbunden ist und dort mit ihrer Geschwindigkeitsmessgröße bewirkt, dass bei einem unterhalb eines Geschwindigkeitsgrenzwertes liegenden Geschwindigkeitsistwert eine Erhöhung des Verzögerungsdifferenz-Schwellenwertes eintritt.

Alternativ kommt auch in Frage, dass bei unterhalb einer vorgegebenen Schwelle liegender Geschwindigkeit eine Prüfung auf einen zu geringen Verzögerungsistwert überhaupt nicht vorgenommen wird.

Um bei der erfindungsgemäßen Anordnung mit einem Bremsaktor eine Beschädigung des Bremssystems direkt zu prüfen, ist es vorteilhaft, wenn der Messanordnung der erfindungsgemäßen Anordnung mindestens ein Kraft-/Drehmomentenmesser vorgeordnet ist, der an einer dem Bremsaktor zugeordneten Achse des Schienenfahrzeugs angebracht ist.

Es kann vorteilhaft sein, einen durch das Bremsen reversibel deformierbaren Verformungskörper mit Sensoren zur Bremskraftmessung vorzusehen.

Alternativ oder ergänzend kann in vorteilhafter Weise bei einem elektrischen Aktor diesem zur Bremskraftmessung eine Strom- oder und Spannungsmesseinrichtung zugeordnet sein.

Ferner wird es als vorteilhaft angesehen, wenn eine Schnell-Zuschaltstufe vorgesehen ist, die eingangsseitig mit einer der Verzögerung sowie mit einer der Geschwindigkeit des Schienenfahrzeugs proportionalen Messgröße beaufschlagt und so ausgebildet ist, dass sie die Messgrößen hinsichtlich ihrer Vorzeichen überprüft und bei gleichen Vorzeichen sofort ein Fehlersignal zur Zuschaltung eines weiteren Bremssystems erzeugt. Eine solche Schnell-Zuschaltstufe ist nicht nur im vorliegenden Zusammenhang vorteilhaft, sondern auch allgemein bei jeder Anordnung zum Überwachen eines Bremssystems mit Vorteil einsetzbar, bei der außer der Verzögerung auch die Geschwindigkeit des Schienenfahrzeugs erfasst wird.

Dazu ist vorteilhafterweise ein Inertialsensorpaket vorgesehen, mit dem Größe und Vorzeichen von Verzögerung und Geschwindigkeit des Schienenfahrzeugs bestimmt werden.

Zur weiteren Erläuterung sind in
Fig. 1. ein Ausführungsbeispiel einer Anordnung zum Überwachen eines Bremssystems, in
Fig. 2 ein Ausführungsbeispiel einer Auswertestufe gemäß dem Ausführungsbeispiel nach Fig. 1, in
Fig. 3 ein Ausführungsbeispiel der erfindungsgemäßen Anordnung zum Überwachen eines Bremssystems mit einem Bremsaktor und in
Fig. 4 ein zusätzliches Ausführungsbeispiel der erfindungsgemäßen Anordnung in einer im Vergleich zu dem Ausführungsbeispiel nach Fig. 3 vereinfachten Ausführung
   jeweils als Blockschaltbild dargestellt.

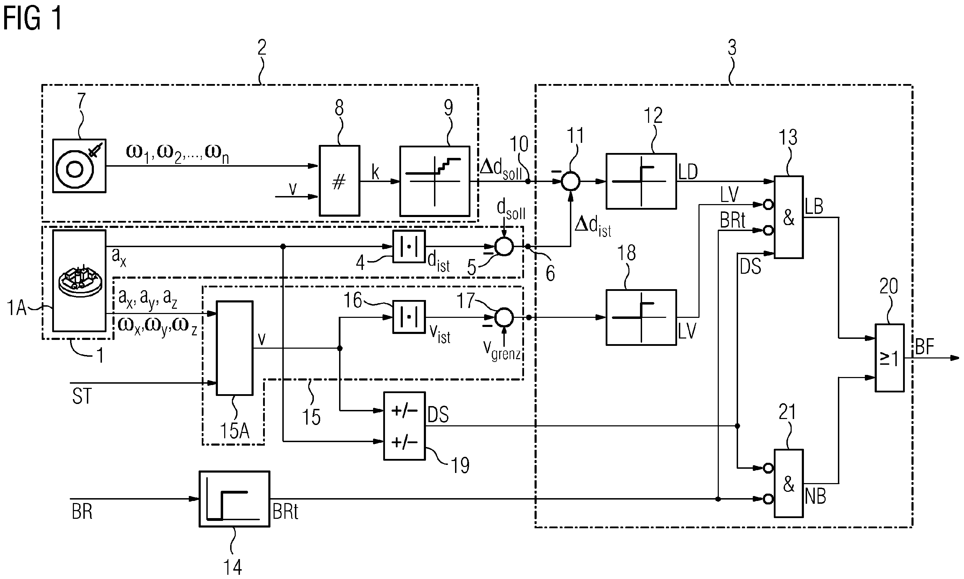

Die in Figur 1 dargestellte Anordnung zum Überwachen eines Bremssystems einer Bremsanordnung eines nicht dargestellten Schienenfahrzeugs enthält als wesentliche Bestandteile eine Messeinrichtung 1 für das Erfassen der Verzögerung des Schienenfahrzeugs, eine Messvorrichtung 2 zum Erfassen des Kraftschlusses zwischen Rad und Schiene bei dem Schienenfahrzeug und eine Auswerteanordnung 3, die bei einer im Vergleich zum Normalfall geringen Verzögerung des Schienenfahrzeugs und einem normalen Kraftschluss zwischen Rad und Schiene ein Fehlermeldesignal BF abgibt.

Die Messeinrichtung 1 enthält ein Inertialsensorpaket 1A, das einen im Einzelnen nicht dargestellten Beschleunigungssensor aufweist, der parallel zur Fahrzeuglängsachse des Schienenfahrzeugs liegt. Mit diesem Beschleunigungssensor des Initialsensorpakets 1A wird ein Verzögerungsistwert aₓ gemessen. An das Inertialsensorpaket 1A bzw. an dessen Beschleunigungssensor ist ein Betragsbildner 4 angeschlossen, der den Betrag des gemessenen Verzögerungsistwertes bildet und an seinem Ausgang einen positiven Verzögerungsistwert dᵢₛₜ erzeugt. Dem Betragsbildner 4 wiederum nachgeordnet ist ein Subtrahierer 5, der auch mit einem Verzögerungssollwert dₛₒₗₗ beaufschlagt ist. Am Ausgang des Subtrahierers 5 und damit auch am Ausgang 6 der Messeinrichtung 1 entsteht dann ein Verzögerungsdifferenzistwert Δdᵢₛₜ.

Die Messvorrichtung 2 enthält einen Drehzahlgeber 7, mit dem die Drehzahlen ω₁, ω₂..., ωₙ gemessen werden, wobei die verschiedenen Achsdrehzahlen den verschiedenen gebremsten Radsätzen des Schienenfahrzeugs entsprechen. Die so gewonnenen Achsdrehzahlmessgrößen werden einem Element 8 zugeführt, welches die Anzahl k der Radsätze mit geringem Kraftschluss zwischen Rad und Schiene ermittelt. Dieses Element 8 wird auch mit einer der Fahrgeschwindigkeit des Schienenfahrzeugs entsprechenden Messgröße v beaufschlagt, die in unten noch näher beschriebener Weise gewonnen ist. In dem Element 8 wird unter Nutzung der Radradienistwerte, der ermittelten Achsdrehzahlen und der Fahrgeschwindigkeit v der Istwert des Schlupfes zwischen Rad und Schiene für jeden Radsatz bestimmt, an dem das Bremssystem wirksam sein soll. Wenn der jeweilige Schlupfistwert einen vorgebbaren Schlupf-Schwellwert überschreitet, gilt der zugehörige Radsatz als gleitend und bremst mit geringem Kraftschluss. Durch Summieren ermittelt das Element 8 die Anzahl k von Radsätzen mit geringem Kraftschluss und führt diesen Wert einem nichtlinearen Glied 9 zu. Das nichtlineare Glied 9 bestimmt einen positiven Verzögerungsdifferenz-Schwellenwert Δdₛₒₗₗ in Abhängigkeit von der Anzahl gleitender Radsätze k mit Hilfe einer monoton steigenden Funktion. Dies bedeutet, dass sich mit zunehmender Anzahl gleitender Radsätze k der Verzögerungsdifferenz-Schwellenwert Δdₛₒₗₗ vergrößert. Damit vergrößert sich sinngemäß die erlaubte Toleranz für die Differenz zwischen Soll- und Istverzögerung. Aufgrund dieser kraftschlussabhängigen Anpassung der Toleranz kann mit hoher Wahrscheinlichkeit davon ausgegangen werden, dass ein Fehlermeldungssignal tatsächlich nur bei einer Schädigung des eingesetzten Bremssystems des Schienenfahrzeugs auftritt. Das Verzögerungsdifferenz-Schwellenwertsignal Δdₛₒₗₗ tritt an einem Ausgang 10 der Messvorrichtung 2 auf.

Die der Messeinrichtung 1 und der Messvorrichtung 2 nachgeordnete Auswerteanordnung 3 weist eingangsseitig einen weiteren Subtrahierer 11 auf, dem einmal der Verzögerungsdifferenzistwert Δdᵢₛₜ von der Messeinrichtung 1 und der Verzögerungsdifferenz-Schwellenwert Δdₛₒₗₗ von der Messvorrichtung 2 zugeführt wird; am Eingang des weiteren Subtrahierers 11 steht dann ein Verzögerungsdifferenz-Zwischenwert Δd_{zw} an. Wenn der Ausgang des weiteren Subtrahierers 11 größer als null ist, wird von einem nachgeordneten Zwei-Punkt-Glied 12 das logische Signal LD an seinem Ausgang auf einen Hoch-Pegel gesetzt. Ein Hoch-Pegel des Signals LD zeigt eine zu geringe Verzögerung des gesamten Schienenfahrzeugs an und stellt daher ein Verzögerungsmangelsignal LD dar. Ist der Ausgang des weiteren Subtrahierers 11 kleiner null, dann bleibt das logische Signal auf Niedrig-Pegel.

Das Verzögerungsmangelsignal LD wird einem UND-Gatter 13 zugeführt, dem weitere logische Signale LV, BRt und DS zugeführt werden. Damit diese vier Signale am Ausgang des UND-Gatters 13 ein logisches Fehlermeldungszwischensignal LB hervorrufen, müssen weitere Bedingungen erfüllt sein, auf die nachstehend eingegangen wird.

Zunächst muss überhaupt eine Bremsanforderung vorhanden sein, denn diese signalisiert, dass ein Bremsvorgang im Gange ist. Eine derartige Bremsanforderung wird durch den Niedrig-Pegel des logischen Signals BR repräsentiert, mit dem ein Totzeitglied 14 beaufschlagt ist. Mit diesem Totzeitglied 14 wird das Signal BR um die Dauer des notwendigen Bremskraftaufbaus verzögert; Ergebnis ist das Ausgangssignal BRt des Totzeitgliedes 14 mit einem Hoch-Pegel.

Sinnvollerweise erfolgt die Überwachung der Bremswirkung des zu überwachenden Bremssystems ausschließlich oberhalb einer Grenz-Fahrgeschwindigkeit v_{grenz}. Dazu wird zunächst die Messgröße der Fahrgeschwindigkeit v aus den Sensorsignalen des Inertialsensorpakets 1A durch geeignete Auswertung in einer Auswertestufe 15A gewonnen. Je nachdem, in welche Richtung das Fahrzeug fährt, kann das Vorzeichen der Messgröße der Fahrgeschwindigkeit v positiv oder negativ sein, weshalb die Messgröße einem weiteren Betragsbildner 16 zugeführt wird. In diesem Betragsbildner 16 wird ein positiver Fahrgeschwindigkeitsistwert vᵢₛₜ gebildet, welcher mit Hilfe eines zusätzlichen Subtrahierers 17 von dem positiven Fahrgeschwindigkeitsgrenzwert v_{grenz} abgezogen wird; der Betragsbildner 16 und der zusätzliche Subtrahierer 17 bilden zusammen mit der Auswertestufe 15A eine Erfassungseinrichtung 15. Sobald der Fahrgeschwindigkeitsistwert unterhalb des Fahrgeschwindigkeitsgrenzwertes v_{grenz} liegt, wird der Ausgang des zusätzlichen Subtrahierers größer null und ein weiteres Zwei-Punkt-Glied 18 schaltet sein logisches Ausgangssignal als blockiersignal LV auf Hoch-Pegel.

Bei dem dargestellten Ausführungsbeispiel soll außerdem sichergestellt sein, dass zur Bremsung vorgesehene, nicht dargestellte Aktoren des zu überwachenden Bremssystems keine antreibende Wirkung entfalten. Das nachgeordnete Auswerteelement 19 ermittelt, ob die Vorzeichen der Geschwindigkeit v und der Verzögerung aₓ verschieden sind. Nur wenn dies der Fall ist, gibt das zusätzliche Element 19 das logische Signal DS mit Hoch-Pegel aus.

Liegen alle Signale LD, LV, BRt und DS mit Hoch-Pegel an dem UND-Gatter 13 gleichzeitig an, dann erzeugt dieses ein Signal LB, das einem ODER-Glied 20 zugeführt wird. An diesem ODER-Glied 20 liegt eingangsseitig auch ein Signal NB eines weiteren UND-Gliedes 21, das vom weiteren Element 19 mit dem logischen Signal DS und von der Totzeitstufe 14 mit dem Signal BRt beaufschlagt ist.

Mit dem weiteren UND-Gatter 21 wird überprüft, ob das zu überwachende Bremssystem eine antreibende Wirkung entfaltet oder nicht. Ist dies der Fall, dann hat das Signal DS einen Hoch-Pegel, und es wird bei einem ebenfalls hohen Pegel des Signals BRt das logische Signal NB am Ausgang des weiteren UND-Gatters 21 auf Hoch-Pegel gesetzt.

Die beiden logischen Signale LB und NB signalisieren also jeweils eine Schädigung des überwachten Bremssystems, so dass von dem ODER-Gatter 20 ein logisches Signal BF als Fehlermeldungssignal ausgegeben wird. Von dem Fehlermeldungssignal BF wird bei einem Hoch-Pegel mindestens ein anderes als das bereits eingesetzte Bremssystem wirksam geschaltet.

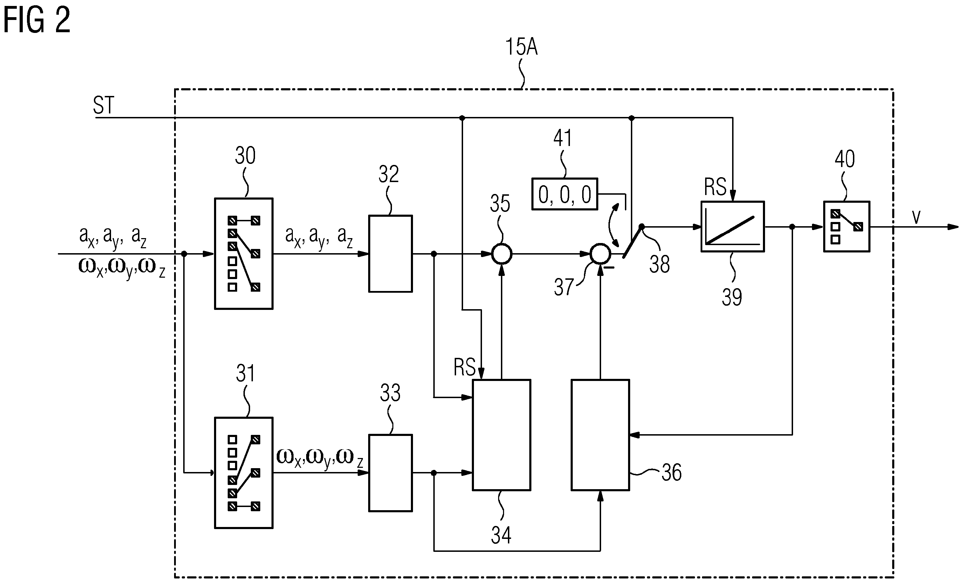

Die in Figur 2 dargestellte Auswertestufe 15A ist einerseits eingangsseitig mit dem Inertialsensorpaket 1A gemäß Figur 1 verbunden und außerdem mit einem Stillstandssignal ST beaufschlagt, das auf einen Hoch-Pegel gesetzt ist, wenn das Schienenfahrzeug stillsteht. Eingangsseitig ist die Auswertestufe 15A mit zwei Splittern 30 und 31 versehen, mit denen die sechs Signale aₓ, a_{y}, a_{z} sowie ωₓ, ω_{y} und ω_{z} zunächst in drei Beschleunigungssignale aₓ, a_{y} und a_{z} sowie in drei Drehradsignale ωₓ, ω_{y} und ω_{z} aufgeteilt werden. Die Messachse des zum Beschleunigungssignal aₓ gehörenden Sensors liegt dabei parallel zur Längsachse des Schienenfahrzeugs. Die Sensorsignale weisen jeweils Biasfehler, Querempfindlichkeitsfehler, Temperaturgang, Messrauschen etc. auf. In einem Kompensationselement 32 werden diese Fehler bei den Beschleunigungssignalen nach bekanntem Verfahren kompensiert. Das Gleiche erfolgt bei den Drehradsignalen im zusätzlichen Kompensationselement 33. Den beiden Kompensationselementen 32 und 33 ist ein Transformationselement 34 nachgeordnet, in dem nach bekanntem Verfahren, beispielsweise über die Berechnung der Eulerwinkel, der Erdbeschleunigungsvektor des Inertialsystems in das Sensorkoordinatensystem transformiert wird. Der transformierte Vektor dient der Kompensation des in den gemessenen Beschleunigungssignalen enthaltenen Anteils der Erdbeschleunigung unter Nutzung eines Summierers 35, der auch an das eine Kompensationselement 32 angeschlossen ist.

Mit dem Ausgang des zusätzlichen Kompensationselementes 33 ist eingangsseitig auch ein Element 36 zur Zentrifugalbeschleunigungsermittlung angeschlossen, in dem nach bekanntem Verfahren der in den Beschleunigungssignalen enthaltene Anteil der Zentrifugalbeschleunigung ermittelt wird. Diesem Element 36 zur Ermittlung der Zentrifugalbeschleunigung ist ein weiterer Summierer 37 nachgeordnet, der mit einem weiteren Eingang auch mit dem Ausgang des Summierers 35 verbunden ist. Am Ausgang des weiteren Subtrahierers 37 liegen daher die um die Erdbeschleunigung und die Zentrifugalbeschleunigung kompensierten Beschleunigungssignale vor.

Ein dem weiteren Summierer nachgeordneter Schalter 38 führt die kompensierten Beschleunigungssignale einem Integrierer 39 zu, dem ein zusätzlicher Splitter 40 nachgeordnet ist. Das von diesem Splitter 40 ausgewählte erste Signal ist die Fahrgeschwindigkeit v.

Von einer nicht gezeigten Einrichtung wird das logische Stillstandssignal ST auf Hoch-Pegel gesetzt, wenn das Schienenfahrzeug still steht. Sobald diese Signalisierung erfolgt, werden durch den Schalter 38 die kompensierten Beschleunigungen mit Hilfe des Elements 41 auf null gesetzt. Ebenso werden über einen Reset-Eingang RS des Integrierers 39 die Zeitintegrale auf null gesetzt, wodurch eine Kalibrierung der driftenden Zeitintegrale beziehungsweise der Fahrgeschwindigkeit erfolgt.

Im Transformationselement 34 kann ein Integrierer enthalten sein, mit dessen Hilfe der transformierte Erdbeschleunigungsvektor berechnet wird. Der Integrierer wird beim Hoch-Pegel des logischen Stillstandssignal ST auf neue Anfangswerte gesetzt, die von den aktuellen Werten der gemessenen Beschleunigungssignale aₓ, a_{y}, a_{z} abhängen können.

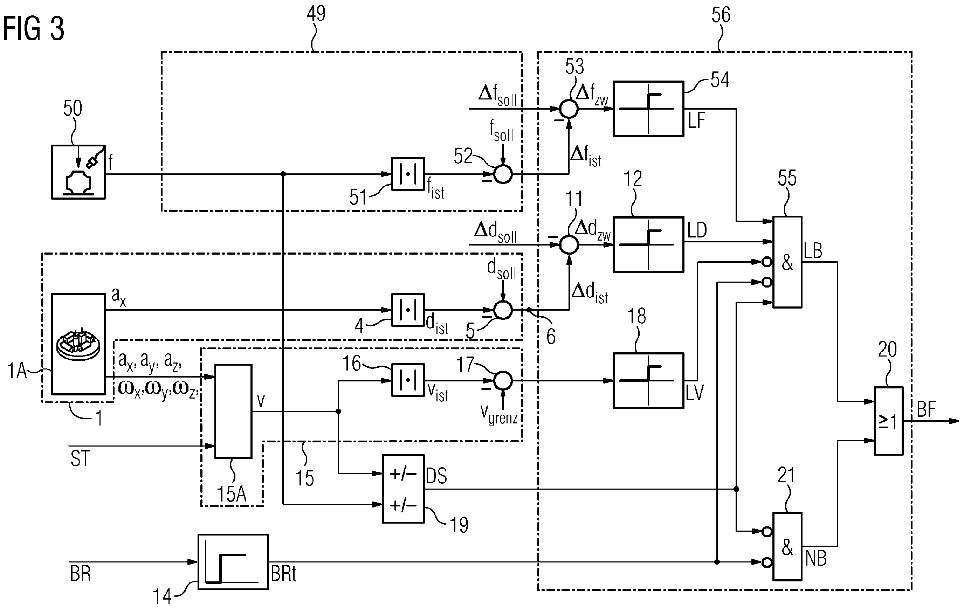

Das Ausführungsbeispiel nach Fig. 3 stimmt in großen Teilen mit dem nach Fig. 1 überein, weshalb für übereinstimmende Teile gleiche Bezugszeichen verwendet sind. Eine Messvorrichtung ist hier nicht mehr vorgesehen, vielmehr wird ein Verzögerungsdifferenz-Schwellenwertsignal Δdₛₒₗₗ fest vorgegeben. Es ist aber eine Messanordnung 49 einem Kraftsensor 50 nachgeordnet, der mit einem zu überwachenden Bremssystem mit mindestens einem Bremsaktor in nicht dargestellter Weise verbunden ist.

Mit Hilfe des Sensors 50 wird im vorliegenden Ausführungsbeispiel eine Messung der Kraft f zur Ermittlung der Bremswirkung des nicht gezeigten Bremsaktors an einer ihm zugeordneten Achse des Schienenfahrzeugs durchgeführt. Da die der Kraft f entsprechende Messgröße vorzeichenbehaftet ist, wird sie zunächst einem Betragsbildner 51 zugeführt, der den positiven Kraftistwert fᵢₛₜ bildet. Der positive Kraftistwert fᵢₛₜ wird von dem vorgebbaren positiven Kraftsollwert fₛₒₗₗ mit Hilfe eines Subtrahierers 52 abgezogen. Der Kraftsollwert fₛₒₗₗ kann dabei beispielsweise auch der Betrag des Sollwerts für die Regelung des Bremsaktors sein, der bevorzugt als Elektromotor ausgebildet sein kann. Wenn der Kraftistwert unterhalb des Kraftsollwertes liegt, ist der Kraftdifferenzistwert Δfᵢₛₜ größer null. Von dem Kraftdifferenzistwert Δfᵢₛₜ wird der positive Kraftdifferenz-Schwellenwert Δfₛₒₗₗ mit Hilfe eines weiteren Subtrahierers 53 abgezogen. Der Kraftdifferenz-Schwellenwert Δfₛₒₗₗ gibt die erlaubte Toleranz für die Differenz zwischen Soll- und Ist-Kraft an. Wenn die Differenz die Toleranz überschreitet, d.h. wenn das Signal am Ausgang des Subtrahierers 53 größer als null ist, wird durch ein Zwei-Punkt-Glied 54 das logische Signal LF auf Hoch-Pegel gesetzt. Wenn die Toleranz nicht überschritten wird, bleibt das logische Signal LF auf Niedrig-Pegel. Ein Hoch-Pegel des logischen Signals LF zeigt daher eine zu geringe Wirkung des Bremsaktors beziehungsweise Elektromotors an, welche auf eine Schädigung des Bremsaktors zurückzuführen ist. Mittels des UND-Gliedes 55, das hier im Vergleich zu dem UND-Glied 13 nach Fig. 1 insgesamt 5 Eingänge aufweist, wird dann das Fehlermeldungssignal BF am Ausgang einer im Vergleich zu dem Ausführungsbeispiel nach Fig.1 nur relativ geringfügig veränderten Auswerteanordnung 56 erzeugt.

In dem dargestellten Ausführungsbeispiel ist angenommen, dass aufgrund der Einbaurichtung des Bremsaktors beziehungsweise Elektromotors die Vorzeichen der Fahrgeschwindigkeit v und der Kraft f immer unterschiedlich sind, wenn der Bremsaktor bzw. Elektromotor eine Bremswirkung entfaltet. Mit Hilfe des Auswerteelements 19 werden beide Vorzeichen miteinander verglichen. Nur bei unterschiedlichen Vorzeichen erhält das logische Signal DS am Ausgang des Zwei-Punkt-Gliedes 19 einen Hoch-Pegel. Damit signalisiert das logische Signal DS in dem in Figur 3 gezeigten Ausführungsbeispiel einen bremsenden Bremsaktor beziehungsweise Elektromotor, während es in dem in Figur 1 gezeigten Ausführungsbeispiel für nicht antreibende Aktoren steht. Das Signal DS wird in beiden Ausführungsbeispielen in gleicher Weise weiterverarbeitet.

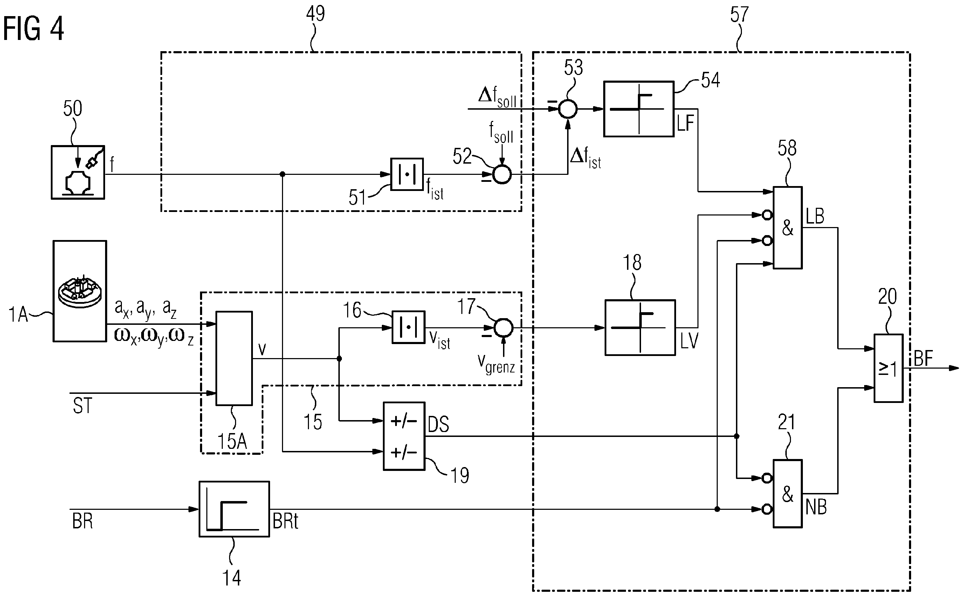

Bei dem Ausführungsbeispiel nach Figur 4, bei dem mit Teilen nach der Fig. 3 übereinstimmende Teile mit den gleichen Bezugszeichen versehen sind, ist die erfindungsgemäße Anordnung im Vergleich zu dem Ausführungsbeispiel nach Figur 3 noch weiter vereinfacht. Das Ausführungsbeispiel gemäß Figur 4 kommt nämlich ohne die Komponenten 4 und 5 der Meseinrichtung 1 gemäß Fig. 3 aus, so dass hier die Messeinrichtung nur noch aus dem Inertialsensorpaket 1A besteht. Die Auswerteanordnung 57 braucht die Elemente 11 und 12 der Auswerteanordnung 56 gemäß Fig. 3 nicht. Das logische Signal LD tritt demzufolge nicht auf. Auf das Kriterium für eine zu geringe Gesamtverzögerung des Schienenfahrzeugs, welche von einer Schädigung des eingesetzten Bremssystems herrühren könnte, wird in diesem Ausführungsbeispiel daher verzichtet. Entsprechend kommt ein UND-Gatter 58 mit vier Eingängen aus.

## Patentansprüche

1. Verfahren zum Überwachen eines Bremssystems mit mindestens einem Bremsaktor einer Bremsanordnung mit mehreren Bremssystemen eines Schienenfahrzeugs, wobei
• eine Verzögerung des Schienenfahrzeugs unter Gewinnung einer Verzögerungsmessgröße erfasst wird, und
• aus einem gemessenen Verzögerungsistwert (dᵢₛₜ) und einem vorgegebenen Verzögerungssollwert (dₛₒₗₗ) als Verzögerungsmessgröße ein Verzögerungsdifferenzistwert (Δdᵢₛₜ) gebildet wird,
**dadurch gekennzeichnet, dass**
• der Verzögerungsdifferenzistwert (Δdᵢₛₜ) mit einem Verzögerungsdifferenz-Schwellenwert (Δdₛₒₗₗ) unter Bildung eines Verzögerungsdifferenz-Zwischenwertes (Δd_{zw}) verglichen wird, und bei einem über einem Toleranzwert liegenden Verzögerungsdifferenz-Zwischenwert (Δd_{zw}) ein Verzögerungsmangelsignal (LD) erzeugt wird, welches einem UND-Glied (55) zugeführt wird,
• eine Bremskraft (f) des mindestens einen Bremsaktors gemessen wird,
• aus einem gemessenen Kraftistwert (fᵢₛₜ) und einem vorgegebenen Kraftsollwert (Δfₛₒₗₗ) ein Kraftdifferenzistwert (Δfᵢₛₜ) gebildet wird,
• der Kraftdifferenzistwert (Δfᵢₛₜ) mit einem Kraftdifferenz-Schwellenwert (Δfₛₒₗₗ) unter Bildung eines Kraftdifferenz-Zwischenwertes (Δf_{zw}) verglichen wird, und bei einem über einem Toleranzwert liegenden Kraftdifferenz-Zwischenwert (Δf_{zw}) ein Kraftmangelsignal (LF) erzeugt wird, welches dem UND-Glied (55) zugeführt wird, und
• aus den dem UND-Glied (55) zugeführten Verzögerungsmangelsignal (LD) und Kraftmangelsignal (LF) ein Fehlermeldungssignal (BF) erzeugt wird,
• wobei ein Geschwindigkeitsistwert (vᵢₛₜ) des Schienenfahrzeugs mit einem Geschwindigkeitsgrenzwert (v_{grenz}) verglichen wird und bei einem unterhalb des Geschwindigkeitsgrenzwertes (v_{grenz}) liegenden Geschwindigkeitsistwert (vᵢₛₜ) die Bildung des Fehlermeldungssignals (BF) blockiert wird.

2. Verfahren nach Anspruch 1, **dadurch gekennzeichnet dass**
• der Verzögerungssollwert (dₛₒₗₗ) in Abhängigkeit von dem gemessenen Geschwindigkeitsistwert (vᵢₛₜ) des Schienenfahrzeugs verändert wird.

3. Verfahren nach Anspruch 1, **dadurch gekennzeichnet, dass**
• bei einem unterhalb des Geschwindigkeitsgrenzwertes (v_{grenz}) liegenden Geschwindigkeitsistwert (vᵢₛₜ) der Verzögerungsdifferenz-Schwellenwert (Δdₛₒₗₗ) erhöht wird.

4. Verfahren nach einem der Ansprüche 1 bis 3, **dadurch gekennzeichnet, dass**
• die Bremskraft (f) des mindestens einen Bremsaktors und eine Messgröße (v) der Geschwindigkeit des Schienenfahrzeugs hinsichtlich ihrer Vorzeichen überprüft werden und bei gleichen Vorzeichen sofort ein Fehlersignal zur Zuschaltung eines weiteren Bremssystem erzeugt wird.

5. Verfahren nach Anspruch 4, **dadurch gekennzeichnet, dass**
• das Vorzeichen der Messgröße (v) der Geschwindigkeit des Schienenfahrzeugs mittels eines Inertialsensorpakets (1A) bestimmt werden.

6. Verfahren nach Anspruch 1, **dadurch gekennzeichnet, dass**
• die Bremskraftmessung mittels einer Kraft- und/oder Drehmomentenmessung an einer dem Bremsaktor zugeordneten Achse des Schienenfahrzeugs erfolgt.

7. Verfahren nach Anspruch 1, **dadurch gekennzeichnet, dass**
• die Bremskraftmessung mittels Sensoren an einem durch das Bremsen reversibel deformierten Verformungskörper erfolgt.

8. Verfahren nach Anspruch 1, **dadurch gekennzeichnet, dass**
• die Bremskraftmessung bei einem elektrischen Aktor durch Messung von Strömen und Spannungen erfolgt.

9. Verfahren nach Anspruch 1, **dadurch gekennzeichnet dass**
• der Kraftsollwert (fₛₒₗₗ) in Abhängigkeit von einem gemessenen Geschwindigkeitsistwert (vᵢₛₜ) des Schienenfahrzeugs verändert wird.

10. Verfahren nach Anspruch 1, **dadurch gekennzeichnet, dass**
• der Kraftsollwert (fₛₒₗₗ) in Abhängigkeit von der Drehzahl eines mit dem Bremsaktor verbundenen Radsatzes verändert wird.

11. Anordnung zum Überwachen eines Bremssystems mit mindestens einem Bremsaktor einer Bremsanordnung mit mehreren Bremssystemen eines Schienenfahrzeugs, **gekennzeichnet durch**
• eine Messeinrichtung (1) zum Erfassen einer Verzögerung des Schienenfahrzeugs unter Gewinnung einer Verzögerungsmessgröße, welche ausgebildet ist, aus einem gemessenen Verzögerungsistwert (dᵢₛₜ) und einem vorgegebenen Verzögerungssollwert (dₛₒₗₗ) einen Verzögerungsdifferenzistwert (Δdᵢₛₜ) als Verzögerungsmessgröße zu bilden,
• eine Messanordnung (49) zum Messen einer Bremskraft des mindestens einen Bremsaktors,
• eine der Messeinrichtung (1) und der Messanordnung (49) nachgeordnete Auswerteanordnung (56), welche ausgestaltet ist
∘ zum Vergleichen des Verzögerungsdifferenzistwertes (Δdᵢₛₜ) mit einem Verzögerungsdifferenz-Schwellenwert (Δdₛₒₗₗ) unter Bildung eines Verzögerungsdifferenz-Zwischenwertes (Δd_{zw}),
∘ zum Erzeugen eines Verzögerungsmangelsignal (LD) bei einem über einem Toleranzwert liegenden Verzögerungsdifferenz-Zwischenwert (Δd_{zw}),
∘ zum Bilden eines Kraftdifferenzistwertes (Δfᵢₛₜ) aus einem gemessenen Kraftistwert (fᵢₛₜ) und einem vorgegebenen Kraftsollwert (Δfₛₒₗₗ),
∘ zum Vergleichen des Kraftdifferenzistwertes (Δfᵢₛₜ) mit einem Kraftdifferenz-Schwellenwert (Δfₛₒₗₗ) unter Bildung eines Kraftdifferenz-Zwischenwertes (Δf_{zw}),
∘ zum Erzeugen eines Kraftmangelsignals (LF) bei einem über einem Toleranzwert liegenden Kraftdifferenz-Zwischenwert (Δf_{zw}), und
∘ zum Zuführen des Verzögerungsmangelsignal (LD) und des Kraftmangelsignals (LF) auf ein UND-Glied (55) und Erzeugen eines Fehlermeldungssignals (BF), und
• eine Erfassungseinrichtung (15) zum Vergleichen eines Geschwindigkeitsistwertes (vᵢₛₜ) des Schienenfahrzeugs mit einem Geschwindigkeitsgrenzwert (v_{grenz}), wobei bei einem unterhalb des Geschwindigkeitsgrenzwertes (v_{grenz}) liegenden Geschwindigkeitsistwert (vᵢₛₜ) das Erzeugen des Fehlermeldungssignals (BF) blockiert wird.

12. Anordnung nach Anspruch 11, **dadurch gekennzeichnet, dass**
• die Erfassungseinrichtung (15) an die Auswerteanordnung (56) ein Blockiersignal (LV) abgibt, mit dem das Erzeugen des Fehlermeldungssignals (BF) in der Auswerteanordnung (56) blockiert wird.

13. Anordnung nach Anspruch 12, **dadurch gekennzeichnet, dass**
• die Erfassungseinrichtung (15) eingangsseitig eine Auswertestufe (15A) aufweist, die mit ihrem Eingang an den Ausgang eines Inertialsensorpaketes (1A) angeschlossen ist und derart ausgebildet ist, dass sie an ihrem Ausgang eine von der Erd- und Zentrifugalbeschleunigung unbeeinflusste Geschwindigkeitsmessgröße des Schienenfahrzeugs abgibt.

14. Anordnung nach Anspruch 12 oder 13,
**dadurch gekennzeichnet, dass**
• die Auswertestufe (15A) ausgangsseitig auch mit der Messvorrichtung (2) verbunden ist und dort mit ihrer Geschwindigkeitsmessgröße (v) bewirkt, dass bei einem unterhalb eines Geschwindigkeitsgrenzwertes liegenden Geschwindigkeitsistwert eine Erhöhung des Verzögerungsdifferenz-Schwellenwertes (Δdₛₒₗₗ) bewirkt wird.

15. Anordnung nach Anspruch 11 oder 12, **dadurch gekennzeichnet, dass**
• der Messanordnung (49) mindestens ein Kraft-/Drehmomentenmesser vorgeordnet ist, der an einer dem Bremsaktor zugeordneten Achse des Schienenfahrzeugs angebracht ist.

16. Anordnung nach Anspruch 11, **dadurch gekennzeichnet, dass**
• ein durch das Bremsen reversibel deformierter Verformungskörper mit Sensoren zur Bremskraftmessung vorgesehen ist.

17. Anordnung nach Anspruch 11, **dadurch gekennzeichnet, dass**
• bei einem elektrischen Aktor diesem zur Bremskraftmessung eine Strom- oder und Spannungsmesseinrichtung zugeordnet ist.

18. Anordnung nach einem der Ansprüche 11 bis 17, **dadurch gekennzeichnet, dass**
• eine Schnell-Zuschaltstufe vorgesehen ist, die eingangsseitig mit einer der Verzögerung sowie mit einer der Geschwindigkeit des Schienenfahrzeugs proportionalen Messgröße beaufschlagt und so ausgebildet ist, dass sie die Messgrößen hinsichtlich ihrer Vorzeichen überprüft und bei gleichen Vorzeichen sofort ein Fehlersignal zur Zuschaltung eines weiteren Bremssystem erzeugt.

19. Anordnung nach Anspruch 18, **dadurch gekennzeichnet, dass**
• ein Inertialsensorpaket vorgesehen ist, mit dem Größe und Vorzeichen von Verzögerung und Geschwindigkeit des Schienenfahrzeugs bestimmt werden.

## Claims

1. Method for monitoring a brake system with at least one brake actuator of a brake arrangement having a plurality of brake systems of a rail vehicle, wherein
• a deceleration of the rail vehicle is detected by obtaining a deceleration measured variable, and
• a deceleration difference actual value (Δd_{act}) is formed from a measured deceleration actual value (d_{act}) and a predefined deceleration setpoint value (dₛₑₜₚ) as a deceleration measured variable,
**characterized in that**
• the deceleration difference actual value (Δd_{act}) is compared with a deceleration difference threshold value (Δdₛₑₜₚ) by forming a deceleration difference intermediate value (Δdᵢₙₜ), and in the case of a deceleration difference intermediate value (Δdᵢₙₜ) which is above a tolerance value, a deceleration defect signal (LD) is generated, which is supplied to an AND element (55),
• a braking force (f) of the at least one brake actuator is measured,
• a force difference actual value (Δf_{act}) is formed from a measured force actual value (f_{act}) and a predefined force setpoint value (fₛₑₜₚ),
• the force difference actual value (Δf_{act}) is compared with a force difference threshold value (Δfₛₑₜₚ) by forming a force difference intermediate value (Δfᵢₙₜ), and in the case of a force difference intermediate value (Δfᵢₙₜ) which is above a tolerance value, a force defect signal (LF) is generated, which is fed to the AND element (55), and
• an error message signal (BF) is generated from the deceleration defect signal (LD) and force defect signal (LF) which are fed to the AND element (55),
• wherein a speed actual value (v_{act}) of the rail vehicle is compared with a speed limiting value (vₗᵢₘᵢₜ), and in the case of a speed actual value (v_{act}) which is below the speed limiting value (vₗᵢₘᵢₜ), the formation of the error message signal (BF) is blocked.

2. Method according to Claim 1, **characterized in that**
• the deceleration setpoint value (dₛₑₜₚ) is changed as a function of the measured speed actual value (v_{act}) of the rail vehicle.

3. Method according to Claim 1, **characterized in that**
• in the case of a speed actual value (v_{act}) which is below the speed limiting value (vₗᵢₘᵢₜ), the deceleration difference threshold value (Δdₛₑₜₚ) is increased.

4. Method according to one of Claims 1 to 3, **characterized in that**
• the braking force (f) of the at least one brake actuator and a measured variable (v) of the speed of the rail vehicle are checked with respect to their signs, and in the case of identical signs an error signal for connecting a further brake system is generated immediately.

5. Method according to Claim 4, **characterized in that**
• the sign of the measured variable (v) of the speed of the rail vehicle is determined by means of an inertia sensor package (1A).

6. Method according to Claim 1, **characterized in that**
• the braking force measurement is carried out by means of a force measurement and/or torque measurement on an axle of the rail vehicle which is assigned to the brake actuator.

7. Method according to Claim 1, **characterized in that**
• the braking force measurement is carried out by means of sensors on a deformation body which is reversibly deformed by the braking.

8. Method according to Claim 1, **characterized in that**
• the braking force measurement is carried out in the case of an electric actuator by measuring currents and voltages.

9. Method according to Claim 1, **characterized in that**
• the force setpoint value (fₛₑₜₚ) is changed as a function of a measured speed actual value (v_{act}) of the rail vehicle.

10. Method according to Claim 1, **characterized in that**
• the force setpoint value (fₛₑₜₚ) is changed as a function of the rotational speed of a wheel set which is connected to the brake actuator.

11. Arrangement for monitoring a brake system with at least one brake actuator of a brake arrangement having a plurality of brake systems of a rail vehicle, **characterized by**
• a measuring device (1) for measuring a deceleration of the rail vehicle by acquiring a deceleration measurement variable which is designed to form a deceleration difference actual value (Δd_{act}) as a deceleration measurement variable from a measured deceleration actual value (d_{act}) and a predefined deceleration setpoint value (dₛₑₜₚ),
• a measuring arrangement (49) for measuring a braking force of the at least one brake actuator,
• an evaluation arrangement (56) which is arranged downstream of the measuring device (1) and the measuring arrangement (49) and is configured
∘ to compare the deceleration difference actual value (Δd_{act}) with a deceleration difference threshold value (Δdₛₑₜₚ) by forming a differential difference intermediate value (Δdᵢₙₜ),
∘ to generate a deceleration defect signal (LD) when there is a deceleration difference intermediate value (Δdᵢₙₜ) which is above a tolerance value,
∘ to form a force difference actual value (Δf_{act}) from a measured force actual value (f_{act}) and a predefined force setpoint value (Δfₛₑₜₚ),
∘ to compare the force difference actual value (Δf_{act}) with a force difference threshold value (Δfₛₑₜₚ) by forming a force difference intermediate value (Δfᵢₙₜ),
∘ to generate a force defect signal (LF) when there is a force difference intermediate value (Δfᵢₙₜ), which is above a tolerance value, and
∘ to feed the deceleration defect signal (LD) and the force defect signal (LF) to an AND element (55) and to generate an error message signal (BF), and
• a detection device (15) for comparing a speed actual value (v_{act}) of the rail vehicle with a speed limiting value (vₗᵢₘᵢₜ), wherein when there is a speed actual value (v_{act}) which is below the speed limiting value (vₗᵢₘᵢₜ), the generation of the error message signal (BF) is blocked.

12. Arrangement according to Claim 11, **characterized in that**
• the detection device (15), outputs a blocking signal (LV) to the evaluation arrangement (56), with which blocking signal (LV) the generation of the error message signal (BF) in the evaluation arrangement (56) is blocked.

13. Arrangement according to Claim 12, **characterized in that**
• the detection device (15) has on the input side an evaluation stage (15A) which is connected by its input to the output of an inertia sensor package (1A) and is embodied in such a way that it outputs at its output a speed measurement variable, which is not influenced by the acceleration due to gravity or the centrifugal acceleration, of the rail vehicle.

14. Arrangement according to Claim 12 or 13,
**characterized in that**
• the evaluation stage (15A) is also connected on the output side to the measuring apparatus (2) and with its speed measured variable (v) causes an increase in the deceleration difference threshold value (Δdₛₑₜₚ) to occur at said measuring apparatus in the case of a speed actual value which is below a speed limiting value.

15. Arrangement according to Claims 11 or 12, **characterized in that**
• at least one force/torque meter is arranged upstream of the measuring arrangement (49) and is provided on an axle of the rail vehicle which is assigned to the brake actuator.

16. Arrangement according to Claim 11, **characterized in that**
• a deformation body which is reversibly deformed by the braking is provided with sensors for measuring the braking force.

17. Arrangement according to Claim 11, **characterized in that**
• in the case of an electric actuator a current measuring device and/or voltage measuring device is assigned thereto for measuring the braking force.

18. Arrangement according to one of Claims 11 to 17, **characterized in that**
• a high-speed activation stage is provided which is supplied on the input side with a measured variable which is proportional to the deceleration and with a measured variable which is proportional to the speed of the rail vehicle, and said high-speed activation stage is embodied in such a way that it checks the measured variables with respect to their signs, and in the case of identical signs immediately generates an error signal for connecting a further brake system.

19. Arrangement according to Claim 18, **characterized in that**
• an inertia sensor package is provided with which the magnitude and signs of the deceleration and speed of the rail vehicle are determined.

## Revendications

1. Procédé de contrôle d'un système de freinage, comprenant au moins un système de frein ayant au moins un actionneur de frein d'un agencement de frein ayant plusieurs systèmes de frein d'un véhicule ferroviaire, dans lequel
• on relève une décélération du véhicule ferroviaire en obtenant une grandeur de mesure de décélération, et
• on forme, comme grandeur de mesure de décélération, une valeur (Δdᵢₛₜ) réelle de différence de décélération à partir d'une valeur (dᵢₛₜ) réelle de décélération mesurée et d'une valeur (dₛₒₗₗ) de consigne de décélération donnée à l'avance,
**caractérisé en ce que**
• on compare la valeur (Δdᵢₛₜ) réelle de différence de décélération à une valeur (Δdₛₒₗₗ) de seuil de différence de décélération en formant une valeur (Δd_{zw}) intermédiaire de différence de décélération et, si une valeur (Δd_{zw}) intermédiaire de différence de décélération est supérieure à une valeur de tolérance, on produit un signal (LD) de défaut de décélération que l'on envoie à une porte ET (55),
• on mesure une force (f) de frein du au moins un actionneur de frein,
• on forme une valeur (Δfᵢₛₜ) réelle de différence de force à partir d'une valeur (fᵢₛₜ) réelle de force mesurée et d'une valeur (Δfₛₒₗₗ) de consigne de force donnée à l'avance,
• on compare la valeur (Δfᵢₛₜ) réelle de différence de force à une valeur (Δfₛₒₗₗ) de seuil de différence de force en formant une valeur (Δf_{zw}) intermédiaire de différence de force et, si la valeur (Δf_{zw}) intermédiaire de différence de force est supérieure à une valeur de tolérance, on produit un signal (LF) de défaut de force que l'on envoie à la porte ET (55), et
• on produit un signal (BF) d'avertissement de défaut à partir du signal (LD) de défaut de décélération envoyé à la porte ET (55) et du signal (LF) de défaut de force,
• dans lequel on compare une valeur (vᵢₛₜ) réelle de vitesse du véhicule ferroviaire à une valeur (v_{grenz}) limite de vitesse et, si la valeur (vᵢₛₜ) réelle de vitesse est inférieure à la valeur (v_{grenz}) limite de vitesse, on arrête la formation du signal (BF) d'avertissement de défaut.

2. Procédé suivant la revendication 1, **caractérisé en ce que**
• on fait varier la valeur (dₛₒₗₗ) de consigne de décélération en fonction de la valeur (vᵢₛₜ) réelle de vitesse mesurée du véhicule ferroviaire.

3. Procédé suivant la revendication 1, **caractérisé en ce que**
• si la vitesse (vᵢₛₜ) réelle de vitesse est inférieure à la valeur (v_{grenz}) limite de vitesse, on augmente la valeur (Δdₛₒₗₗ) de seuil de différence de décélération.

4. Procédé suivant l'une des revendications 1 à 3, **caractérisé en ce que**
• on contrôle le signe de la force (f) de frein du au moins un actionneur de frein et une grandeur (v) de mesure de la vitesse du véhicule ferroviaire et, s'ils ont le même signe, on produit immédiatement un signal de défaut pour mettre en circuit un autre système de frein.

5. Procédé suivant la revendication 4, **caractérisé en ce que**
• on détermine le signe de la grandeur (v) de mesure de la vitesse du véhicule ferroviaire au moyen d'un paquet (1A) de capteurs à inertie.

6. Procédé suivant la revendication 1, **caractérisé en ce que**
• la mesure de force de frein s'effectue au moyen d'une mesure de force et/ou de couple sur un essieu, associé à l'actionneur de frein, du véhicule ferroviaire.

7. Procédé suivant la revendication 1, **caractérisé en ce que**
• la mesure de force de frein s'effectue au moyen de capteurs sur un corps de déformation déformé réversiblement par le frein.

8. Procédé suivant la revendication 1, **caractérisé en ce que**
• la mesure de la force de frein s'effectue, pour un actionneur électrique, par mesure de courants et de tensions.

9. Procédé suivant la revendication 1, **caractérisé en ce que**
• on fait varier la valeur (fₛₒₗₗ) de consigne de force en fonction d'une valeur (vᵢₛₜ) réelle de vitesse mesurée du véhicule ferroviaire.

10. Procédé suivant la revendication 1, **caractérisé en ce que**
• on fait varier la valeur (fₛₒₗₗ) de consigne de force en fonction de la vitesse de rotation d'un essieu relié à l'actionneur de frein.

11. Agencement de contrôle d'un système de frein, comprenant au moins un actionneur de frein d'un agencement de frein ayant plusieurs systèmes de frein d'un véhicule ferroviaire, **caractérisé par**
• un dispositif (1) de mesure pour relever une décélération du véhicule ferroviaire en obtenant une grandeur de mesure de décélération, qui est constitué pour former, comme grandeur de mesure de décélération, une valeur (Δdᵢₛₜ) réelle de différence de décélération à partir d'une valeur (dist) réelle de décélération mesurée et d'une valeur (dₛₒₗₗ) de consigne de décélération donnée à l'avance,
• un agencement (49) de mesure pour mesurer une force de frein du au moins un actionneur de frein,
• un agencement (56) d'exploitation, qui est en aval du dispositif (1) de mesure et de l'agencement (49) de mesure et qui est conformé
∘ pour comparer la valeur (Δdᵢₛₜ) réelle de différence de décélération à une valeur (Δdₛₒₗₗ) de seuil de différence de décélération, en formant une valeur (Δd_{zw}) intermédiaire de différence de décélération,
∘ pour produire un signal (LD) de défaut de décélération, si la valeur (Δd_{zw}) intermédiaire de différence de décélération est supérieure à une valeur de tolérance,
∘ pour former une valeur (Δfᵢₛₜ) réelle de différence de force à partir d'une valeur (fᵢₛₜ) réelle de force mesurée et d'une valeur (Δfₛₒₗₗ) de consigne de force donnée à l'avance,
∘ pour comparer la valeur (Δfᵢₛₜ) réelle de différence de force à une valeur (Δfₛₒₗₗ) de seuil de différence de force, en formant une valeur (Δf_{zw}) intermédiaire de différence de force,
∘ pour produire un signal (LF) de défaut de force, si la valeur (Δf_{zw}) intermédiaire de différence de force est supérieure à une valeur de tolérance, et
∘ pour envoyer le signal (LD) de défaut de décélération et le signal (LF) de défaut de force à une porte ET (55) et pour produire un signal (BF) d'avertissement de défaut, et
• un dispositif (15) de détection pour comparer une valeur (vᵢₛₜ) réelle de vitesse du véhicule ferroviaire à une valeur (v_{grenz}) limite de vitesse, dans lequel, si la valeur (vᵢₛₜ) réelle de vitesse est inférieure à la valeur (v_{grenz}) limite de vitesse, la production du signal (BF) d'avertissement de défaut est arrêtée.

12. Agencement suivant la revendication 11, **caractérisé en ce que**
• le dispositif (15) de détection envoie à l'agencement (56) d'exploitation un signal (LV) d'arrêt, par lequel la production du signal (BF) d'avertissement de défaut est arrêtée dans l'agencement (56) d'exploitation.

13. Agencement suivant la revendication 12, **caractérisé en ce que**
• le dispositif (15) de détection a, du côté de l'entrée, un étage (15A) d'exploitation, qui est raccordé par son entrée à la sortie d'un paquet (1A) de capteurs à inertie et qui est constitué de manière à émettre, sur sa sortie, une grandeur de mesure de vitesse du véhicule ferroviaire, qui n'est pas influencée par l'accélération terrestre et l'accélération centrifuge.

14. Agencement suivant la revendication 12 ou 13, **caractérisé en ce que**
• l'étage (15A) d'exploitation est relié, du côté de la sortie, également au dispositif (2) de mesure et y provoque, par sa grandeur (v) de mesure de vitesse, si la valeur réelle de vitesse est inférieure à une valeur limite de vitesse, une élévation de la valeur (Δdₛₒₗₗ) de seuil de différence de décélération.

15. Agencement suivant la revendication 11 ou 12, **caractérisé en ce que**
• en amont de l'agencement (49) de mesure, est monté au moins un mesureur de force/couple, qui est mis sur un essieu, associé à l'actionneur de frein, du véhicule ferroviaire.

16. Agencement suivant la revendication 11, **caractérisé en ce que**
• il est prévu un corps de déformation déformé réversiblement par le frein et ayant des capteurs de mesure de force du frein.

17. Agencement suivant la revendication 11, **caractérisé en ce que**
• s'il y a un actionneur électrique, il est associé à celui-ci, pour la mesure de la force de frein, un dispositif de mesure de courant ou un dispositif de mesure de tension.

18. Agencement suivant l'une des revendications 11 à 17, **caractérisé en ce que**
• il est prévu un étage de mise en circuit rapide, qui est alimenté, du côté de l'entrée, par une grandeur de mesure proportionnelle à la décélération, ainsi qu'à la vitesse du véhicule ferroviaire, et qui est constitué de manière à contrôler le signe des grandeurs de mesure et à produire, si les signes sont les mêmes, pour la mise en circuit d'un autre système de frein, immédiatement un signal de défaut.

19. Agencement suivant la revendication 18, **caractérisé en ce que**
• il est prévu un paquet de capteurs à inertie, par lequel la grandeur et le signe de la décélération et de la vitesse du véhicule ferroviaire sont déterminés.
